## Europäisches Patentamt
## European Patent Office
## Office européen des brevets

(11) Publication number: **0 021 165**
**B1**

(12) # EUROPEAN PATENT SPECIFICATION

(45) Date of publication of patent specification: 02.05.84    (51) Int. Cl.³: **B 23 K 26/06**

(21) Application number: **80103118.8**

(22) Date of filing: **04.06.80**

(54) Optical perforating apparatus and system.

(30) Priority: 08.06.79 US 46808

(43) Date of publication of application:
07.01.81 Bulletin 81/1

(45) Publication of the grant of the patent:
02.05.84 Bulletin 84/18

(84) Designated Contracting States:
CH DE FR GB IT LI NL

(56) References cited:
DE - A - 2 750 038
DE - A - 2 920 264
US - A - 4 118 619

(73) Proprietor: **PHILIP MORRIS INCORPORATED**
120 Park Avenue
New York, New York 10017 (US)

(72) Inventor: **Cashwell, Ernest**
7603 Comanche Drive
Richmond Virginia 23225 (US)

(74) Representative: **Abitz, Walter, Dr.-Ing.**
Abitz, Morf, Gritschneder P.O. Box 86 01 09
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Optical perforating apparatus and system

Field of the Invention

This invention pertains to optical systems and, in particular, to optical systems for perforating sheet material to obtain a precise perforation pattern or matrix.

Background of the Invention

Perforation systems for perforating various types of sheet material have been utilized in a variety of fields. One particular field in which systems of this type have been used is the field of cigarette manufacture. In cigarette manufacture, perforating systems are employed to perforate cigarette rod paper and/or cigarette filter tipping paper to provide cigarettes having preselected dilution characteristics. Perforation systems for this purpose must be capable of providing precise and uniform perforation patterns or matrices to achieve with consistency the desired dilution characteristics.

To date mechanical puncture systems and electric arc systems have been developed for cigarette paper perforation. With these systems, individual perforating elements provide perforations for a particular row of a perforation pattern and uniformity of the pattern is ensured by synchronizing operation of the perforating elements. Another type of system for perforating cigarette paper involves the use of laser beams. Systems of this type have employed single or multiple laser beam sources and controlled movement of these sources and the paper to realize perforation patterns having the desired precision. Laser beam practices have also been proposed wherein beam splitting optical components provide a multiple of component beams which are focussed on the paper to provide multiple perforations.

US—A—4 118 619 shows a laser beam directed on a plurality of rotary discs, each carrying alternate reflective elements and apertures. Other reflective elements are fixed in order to receive the light paths reflected by the moving reflective elements or passing through the apertures, so that all light paths reach and perforate a moving web.

Two earlier applications, not prepublished and so being not part of the prior art, GB—A—2 022 492 and FR—A—2 437 008 propose other similar practices:

In one a first laser beam perforating practice is disclosed wherein multiple perforations are realized by confronting the laser beam successively alternately with reflective members. This practice utilizes a rotatable disc assembly comprised of a plurality of discs mounted in spaced relationship along the assembly rotational axis. Each disc is provided about its periphery with a plurality of flat reflective facets arranged at an orthogonal attitude to the assembly rotational axis and mutually spaced by light transmissive portions. The discs are of increasing diameter and misaligned such that each reflective facet of a given disc is aligned with light transmissive portions of the remaining discs. In this manner, rotation of the disc assembly with its rotational axis angled to the path of the laser beam results in successive alternate issuance of the beam from the facets of the different discs. With this practice, spacing the discs may be varied to meet particular perforation pattern spacing requirements.

In the other is disclosed a laser perforating practice employing a disc assembly, successive discs are arranged along the assembly rotational axis in abutting relationship and the discs are provided with reflective facets mutually spaced by light transmissive portions. In this case, the discs are of equal diameter and the facets of the forward disc are at an orthogonal attitude relative to the assembly axis, while those of the rearward disc are at a non-orthogonal attitude relative thereto. Disposition of the rotating assembly angled to the laser beam, again results in successive alternate issuance of the beam from the reflective facets of the different discs.

While the above-discussed laser perforating systems utilizing rotatable disc assemblies are advantageous over prior laser systems from the standpoint of speed of operation and maximum utilization of the laser energy, alternative systems which enable more suitable physical arrangement of the system components and attendant ease of manufacture would be desirable. desirable.

It is therefore a broad object of the present invention to provide a laser beam perforating system having features promotive of more suitable physical disposition of system components.

Summary of the Invention

In accordance with the principles of the present invention, the above and other objectives are realized in a laser beam perforating system comprising a rotatable assembly including first and second reflective means supported in immediate spaced succession for rotation about the rotational axis of the assembly and each having light reflective elements arranged in a locus about and at a non-orthogonal attitude to the assembly rotational axis. At least the first light reflective means is further provided with light transmissive portions between its successive light reflective elements and this first light reflective means is situated such that its light transmissive portions are in alignment with light reflective elements of the second reflective means. In the course of assembly rotation, a laser beam moving parallel to the assembly rotational axis is confronted by the reflective elements of the first and second rotating reflective means, whereby the beam is successively alternatively reflected thereby.

With the present perforating system, the assembly rotational axis and the laser beam are in parallel alignment promoting ease of arrangement of the assembly and laser source. In the perforation of a moving web of paper, the web is also maintainable in parallel orientation with the rotational axis and the beam, further promoting ease of assembly arrangement.

In a preferred form, the second reflective means is also provided with light transmissive portions between its successive light reflective elements and these light transmissive portions are in alignment with the light reflective elements of the first means. In this form, the first and second reflective means are discs of equal diameter which similarly taper in radial extent along their respective axes. Apertures extending axially through the tapered disc surfaces form the light transmissive portions and define therebetween surface portions forming the reflective elements. The discs are similar, thereby facilitating disc production.

Brief Description of the Drawings

The above and other features and aspects of the present invention will become more apparent upon reading the following detailed description in conjunction with the accompanying drawings, in which:

FIG. 1 is a block diagrammatic view of a perforating system in accordance with the principles of the present invention;

FIG. 2 is a front view of a disc employed in the system of Fig. 1;

FIG. 3 is a side elevation view of the disc of Fig. 1;

FIG. 4 is a diagrammatic presentation showing the manner of alignment of the discs employed in the system of Fig. 1; and

FIG. 5 is a plan elevation of the system of Fig. 1.

Detailed Description

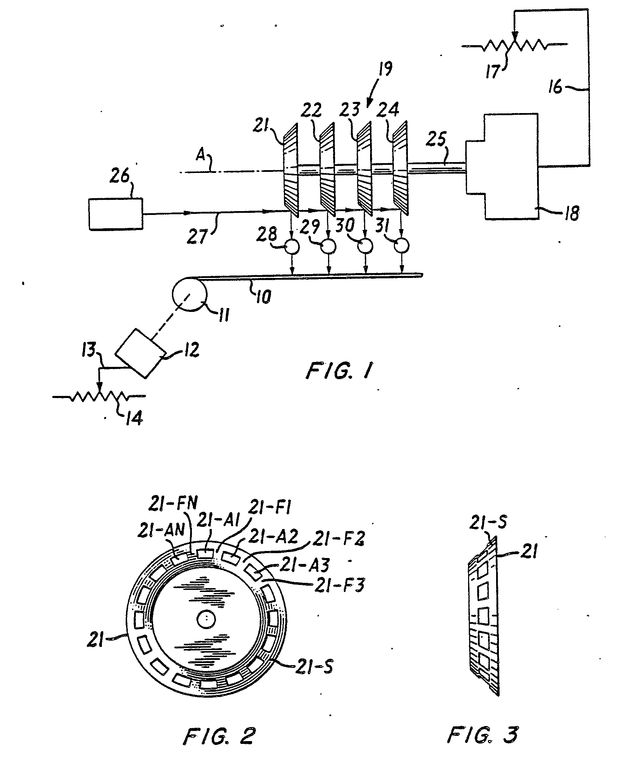

In Fig. 1, a web 10 of sheet material to be perforated is collected by a take-up drum 11 following horizontal transport from a payout drum, not shown. Take-up drum 11 is rotated by drive unit 12 with a drum speed being established by a control signal provided on line 13 as furnished by potentiometer 14 or like settable device. A further control signal derived on line 16 from potentiometer 17 controls drive unit 18 of rotatable light-reflector assembly 19. The latter assembly includes a plurality of rotatable light reflective discs which, in the present illustrative case, are shown as four discs 21, 22, 23 and 24 of similar configuration. The discs 21—24 are arranged in immediate spaced succession along the assembly rotational axis A. A shaft 25 situated along the axis A is rotated by the drive unit 18, and the discs are keyed thereto for rotation therewith.

Laser 26 generates a continuous output beam 27 in parallel relation with the reflector assembly rotational axis at a location adjacent the discs 21—24. Light beams reflected by the discs are conducted by respective focussing lenses 28—31, to the web 10.

Figs. 2 and 3 show front and side elevation views of the disc 21. As shown, the disc is tapered or beveled along its axial length to define a surface 21—S which is at a non-orthogonal attitude to the assembly rotational axis when the disc is keyed to the shaft 25. Typically, the disc might be tapered at 45° so as to result in a 45° angle between the surface 21—S and the rotational axis A. Spaced about the periphery of the surface 21—S and extending through the disc are a plurality of circumferentially spaced light-transmissive portions, shown as apertures 21—A1 to 21—AN. These light transmissive portions define light reflective elements of facets 21—F1 to 21—FN therebetween. As above-noted, the discs 22—24 are of similar configuration to the disc 21, and therefore, also have aperture and reflective facet configurations, as shown in Figs. 2 and 3.

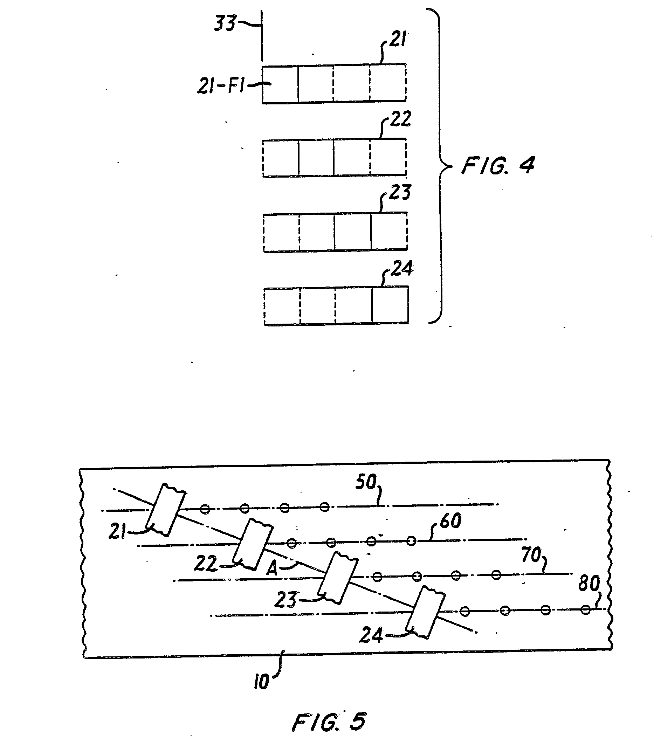

The four discs, 21—24 are keyed in misaligned orientation to the shaft 25 so as to result in successive alternate reflection of the beam 27 in a preselected sequence upon rotation of the assembly 19. Fig. 4 illustrates one misaligned orientation wherein reflections of the beam 27 occurs in the sequence of discs 21, 22, 23 and 24.

In Fig. 4, the circumferential surface of each of the discs 21—24 is shown relative to a line 33 running parallel to the left edge of the first facet 21—F1 of the disc 21. For convenience, only a surface portion equal to a single facet to facet spacing is actually depicted, this circumferential portion being repeated around the disc. Also for convenience, the disc aperture sections have been segmented by dashed lines into reflective facet length portions. Moving rightward from the line 33 the disc 21 contains a first reflective facet followed by three facet length apertures. The disc 22 contains a first facet length aperture followed by a facet which itself is followed by two facet length apertures. The disc 23 is the reverse of the disc 22 and contains two reflective facet length apertures followed by a facet and a succeeding facet length aperture. Finally, the disc 24 is the reverse of disc 21 and has a 3 facet length apertures followed by a reflective facet.

With the discs 21—24 misaligned as in Fig. 4, the beam 27 is first reflected by the disc 21 through confrontation with the facet 21—F1. Subsequent rotation of the assembly 19 brings the beam 27 in alignment with the first facet length aperture section of the disc 21 and with the first reflective facet of the disc 22, resulting in reflection of the beam from the latter disc. Again, further rotation of the assembly brings facet length apertures of both discs 21 and 22 into alignment with the beam and the first reflective facet of the disc 23. Reflection from the disc 23 thereby occurs. Finally, continued rotation brings the beam 27 into alignment with facet · length apertures of the three discs 21—23 and the reflective facet of the disc 24 causing reflection of the beam by the latter. As can be appreciated, with the illustrative disc misalignment of Fig. 4, the beam 27 will issue successively from the discs in the order of discs 21—24 and this will be repeated for successive circumferential disc lengths.

Referring to Fig. 3, each confrontation of the beam 27 with the reflective facets of the discs 21—24 results in the production of reflective beams, these beams being focussed by the lenses 28—31 on the web 10. As shown in Fig. 5, these reflected beams result in perforation rows 50, 60, 70 and 80 in the medium 10.

The disc assembly 19, while orientated with its rotational axis A in a plane parallel to the web 10, can be positioned with its axis at various transverse angles to the web axis. The particular angle selected will depend upon the desired row-to-row spacing of the resultant perforation rows 50, 60, 70 and 80. This spacing will also be a function of the axial spacing between the discs. In practice, the latter spacing and the angular orientation of the assembly 19 will be adjusted to provide the required row-to-row spacing and matrix pattern.

As shown in Figs. 2 and 3, the reflective facets defined by the regions between the apertures of the discs are of slightly curved configuration. Other facet configurations arranged at a non-orthogonal attitude to the assembly axis may also be employed. Thus, for example, planar configurations may be employed. This may be accomplished by providing the discs with flat surfaces between successive apertures either by machining the discs or by affixing thereto flat mirrors. Additionally, the facets might also be cupped or otherwise configured to minimize divergence.

As can be appreciated, with the reflective facets of the perforating assembly 19 at non-orthogonal attitudes to the assembly rotational axis, such axis and the beam 27 are maintainable in parallel, thereby permitting like orientation of both the laser source and the assembly. Fabrication of the apparatus and component alignment are thus facilitated. Similarly, the web 10 can also be orientated in a plane parallel to the beam and assembly axis, whereby fabrication and alignment are further facilitated. Attendant the present apparatus is, therefore, manufacture and alignment simplification, this being additionally aided by the use of similar disc configurations.

## Claims

1. Apparatus for perforating a web of sheet material comprising means (26) for generating a beam (27) of optical energy, a rotatable assembly, the assembly having at least first (21) and second (22) light reflective means supported in immediate spaced succession along its rotational axis (A), the light reflective means (21, 22) each having spaced apart light reflective elements (21—F1 to 21—FN) disposed circumferentially about the axis of rotation (A) of the assembly, the first light reflective means (21) further having, between adjacent ones of its light reflective elements (21—F1 to 21—FN), light transmissive portions (21—A1 to 21—AN), each of which is in registry with a corresponding light reflective element of the second light reflective means (22), and means (12) for transporting a web (10) of sheet material in light receiving relation to said first and second reflective means, characterised in that the light reflective elements (21—F1 to 21—FN) are at a non-orthogonal attitude to the rotational axis (A) of the assembly, that the rotational axis (A) is parallel to and spaced from the beam axis such that as the assembly rotates about the rotational axis the beam is successively alternately reflected by the light reflective elements of the first and second reflective means, and that the web transport means (12) is arranged to transport the web (10) in a plane parallel to the rotational axis (A) of the assembly.

2. Apparatus in accordance with claim 1 characterised in that the beam (27) of optical energy is a laser beam; and the first and second reflective means (21, 22) comprise first and second discs, respectively, arranged perpendicular to and with their axes along the rotational axis (A) of the assembly.

3. Apparatus in accordance with claim 2 characterised in that the first disc (21) is tapered in radial extent along its axis to define a first tapered surface (21—S), that the first disc (21) has first light transmissive apertures (21—A1 to 21—AN) extending therethrough and opening out of said first tapered surface to define the light transmissive portions of the first reflective means, the portions of the first tapered surface between mutually disposed ones of the light transmissive apertures (21—A1 to 21—AN) defining the light reflective elements (21—F1 to 21—FN) of the first reflective means (21), that the second disc (22) is tapered in radial extent along its axis to define a second tapered surface, and that the light reflective elements of the second reflective means (22) are defined by portions of the second tapered surface.

4. Apparatus in accordance with claim 3 characterised in that the first and second discs (21, 22) are of equal diameter and the first and second tapered surfaces are equally tapered.

5. Apparatus in accordance with claim 4 characterised in that the second disc (22) also has light transmissive apertures extending therethrough and each opening out of the second tapered surface between mutually disposed ones of its light reflective elements and that each of such light transmissive apertures is in registry with a corresponding one of the reflective element defining portions of the first tapered surface (21—S).

6. Apparatus in accordance with claim 3, 4 or 5 characterised in that the assembly further includes a rotatable shaft (25) disposed along the (A) rotational axis and to which said discs (21, 22) are keyed for rotation therewith.

## Revendications

1. Appareil de perforation d'une bande de matière en feuille comprenant un dispositif (26) pour produire un faisceau (27) d'énergie optique, un ensemble tournant, l'ensemble comprenant au moins un premier (21) et un second (22) dispositifs réfléchissant la lumière supportés en successions espacées immédiates le long de son axe de rotation (A), les dispositifs réfléchissant la lumière (21, 22) comportant chacun des éléments réfléchissant la lumière (21—F1 à 21—FN) espacés les uns des autres, disposés circonférentiellement autour de l'axe de rotation (A) de l'ensemble, le premier dispositif réfléchissant la lumière (21) comportant en outre, entre ces éléments voisins réfléchissant la lumière (21—F1 à 21—FN) des parties transmettant la lumière (21—A à 21—AN) dont chacun est aligné avec un élément réfléchissant la lumière correspondant du second dispositif réfléchissant la lumière (22) et un dispositif (12) pour transporter une bande (10) de matière en feuille en relation de réception de lumière avec ledit premier et le second dispositifs réflecteurs, caractérisé en ce que les éléments réfléchissant la lumière (21—F1 à 21—FN) sont en position non perpendiculaire à l'axe de rotation (A) de l'ensemble, que l'axe de rotation (A) est parallèle et espacé de l'axe du faisceau de manière que lorsque l'ensemble tourne autour de l'axe de rotation, le faisceau soit réfléchi alternativement et successivement par les éléments réfléchissant la lumière du premier et du second dispositifs réfléchissants et en ce que le dispositif de transport de bande (12) est disposé pour transporter la bande (10) dans un plan parallèle à l'axe de rotation (4) de l'ensemble.

2. Appareil selon la revendication 1, caractérisé en ce que le faisceau (27) d'énergie optique est un faisceau laser, et le premier et le second dispositifs réfléchissants (21, 22) consistent respectivement en un premier et un second disques disposés perpendiculairement et avec leurs axes le long de l'axe de rotation (A) de l'ensemble.

3. Appareil selon la revendication 2, caractérisé en ce que le premier disque (21) est conique dans la direction radiale suivant son axe pour définir une première surface conique (21—S), que le premier disque (21) comporte des premières ouvertures transmettant la lumière (21—A1) à 21—AN) s'étendant au travers et débouchant à la première surface conique pour définir les parties transmettant la lumière du premier dispositif réfléchissant, les parties de la première surface conique entre celles disposées mutuellement des ouvertures (21—A1 à 21—AN) transmettant la lumière définissant les éléments réfléchissant la lumière (21—F1 à 21—FN) du premier dispositif réfléchissant (21), en ce que le second disque (22) est conique dans la direction radiale suivant son axe pour définir une seconde surface conique et en ce que les éléments réfléchissant la lumière du second dispositif réfléchissant (22) sont définis par des parties de la seconde surface conique.

4. Appareil selon la revendication 3, caractérisé en ce que le premier et le second disques (21, 22) ont le même diamètre et la première et la seconde surfaces coniques ont la même conicité.

5. Appareil selon la revendication 4, caractérisé en ce que le second disque (22) comporte également des ouvertures transmettant la lumière, le traversant, et s'ouvrant sur la seconde surface conique entre ses éléments réfléchissants disposés mutuellement, et en ce que chacune des ouvertures transmettant la lumière est en alignement avec l'un correspondant des éléments réfléchissants définissant des parties de la premières surface conique (21—S).

6. Appareil selon la revendication 3, 4 ou 5, caractérisé en ce que l'ensemble comporte en outre un arbre tournant (25) disposé le long de l'axe de rotation (A) et sur lequel lesdits disques (21, 22) sont bloqués pour tourner avec lui.

## Patentansprüche

1. Vorrichtung zum Perforieren einer Bahn von Flächenmaterial mit Mitteln (26) zur Erzeugung eines Strahls (27) optischer Energie, einer drehbaren anordnung, wobei die Anordnung wenigstens erste (21) und zweite (22) lichtreflektierende Mittel aufweist, die in unmittelbarer, beabstandeter Aufeinanderfolge entlang ihrer Drehachse (A) gehaltert sind, die lichtreflektierende Mittel (21, 22) jeweils beabstandete lichtreflektierende Elemente (21—F1 bis 21—FN) aufweisen, die auf dem Umfang um die Drehachse (A) der Anordnung angeordnet sind, das erste lichtreflektierende Mittel (21) ferner zwischen benachbarten der lichtreflektierenden Elemente (21—F1 bis 21—FN) lichtdurchlässige Bereiche (21—A1 bis 21—AN) aufweist, von denen sich jedes in Fluchtung mit einem entsprechenden lichtreflektierenden Element des zweiten lichtreflektierenden Mittels (22) befindet, und Mitteln (12) zum Transport einer Bahn (10) von Flächenmaterial in lichtaufnehmender Beziehung zu den ersten und zweiten reflektierenden Mitteln, dadurch gekennzeichnet, daß die lichtreflektierenden Elemente (21—F1 bis 21—FN) sich in einer nicht-orthogonalen Lage zu der Drehachse (A) der Anordnung befinden, daß die Drehachse (A) parallel und mit Abstand zu der Strahlachse liegt, derart, daß bei Drehung der Anordnung um die Drehachse der Strahl auf-

einanderfolgend abwechselnd durch die licht-reflektierenden Elemente des ersten und des zweiten reflektierenden Mittels reflektiert wird, und daß das Bahntransportmittel (12) so eingerichtet ist, daß es die Bahn (10) in einer Ebene parallel zur Drehachse (A) der Anordnung transportiert.

2. Vorrichtung nach Anspruch 1, dadurch gekennzeichnet, daß der Strahl (27) optischer Energie ein Laserstrahl ist und die ersten und zweiten reflektierenden Mittel (21, 22) erste bzw. zweite Scheiben aufweisen, die senkrecht zu der Drehachse (A) der Anordnung und mit ihren Achsen entlang der Drehachse (A) der Anordnung angeordnet sind.

3. Vorrichtung nach Anspruch 2, dadurch gekennzeichnet, daß die erste Scheibe (21) in radialer Erstreckung längs ihrer Achse konisch ist, um eine erste konische Fläche (21—S) festzulegen, daß die erste Scheibe (21) erste lichtdurchlässige Öffnungen (21—A1 bis 21—AN) aufweist, die sich durch sie hindurcherstrecken und sich aus der ersten konischen Fläche heraus öffnen, um die lichtdurchlässigen Bereiche des ersten reflektierenden Mittels festzulegen, wobei die Bereich der ersten konischen Fläche zwischen abwechselnd angeordneten der lichtdurchlässigen Öffnungen (21—A1 bis 21—AN) die lichtreflektierenden Elemente (21—F1 bis 21—FN) des ersten reflektierenden Mittels (21) festlegen, daß die zweite Scheibe (22) in radialer Erstreckung längs ihrer Achse konisch ist, um eine zweite konische Fläche festzulegen, und daß die lichtreflektierenden Elemente des zweiten reflektierenden Mittels (22) durch Bereiche der zweiten konischen Fläche festgelegt sind.

4. Vorrichtung nach Anspruch 3, dadurch gekennzeichnet, daß die ersten und zweiten Scheiben (21, 22) von gleichem Durchmesser sind und daß die ersten und zweiten konischen Flächen in gleicher Weise konisch sind.

5. Vorrichtung nach Anspruch 4, dadurch gekennzeichnet, daß die zweite Scheibe (22) ebenfalls lichtdurchlässige Öffnungen aufweist, die sich durch sie hindurcherstrecken und sich jeweils aus der zweiten konischen Fläche zwischen abwechselnd angeordneten der lichtreflektierenden Elemente öffnen, und daß jede dieser lichtdurchlässigen Öffnungen sich in Fluchtung mit einem entsprechenden der reflektierenden Elemente befindet, die die Bereiche der ersten konischen Fläche (21—S) festlegen.

6. Vorrichtung nach Anspruch 3, 4 oder 5, dadurch gekennzeichnet, daß die Anordnung ferner eine drehbare Welle (25) aufweist, die längs der Drehachse (A) angeordnet ist und auf der die Scheiben (21, 22) zur Drehung damit befestigt sind.

FIG. 1

FIG. 2

FIG. 3

FIG. 4

FIG. 5